Europäisches Patentamt

European Patent Office

Office européen des brevets

(11) Numéro de publication: **0 199 610**
**A2**

## (12) DEMANDE DE BREVET EUROPEEN

(21) Numéro de dépôt: 86400455.1

(22) Date de dépôt: 05.03.86

(51) Int. Cl.⁴: **G01N 5/00 , G01N 25/00**

(30) Priorité: **15.04.85 MA 20633**

(43) Date de publication de la demande:
**29.10.86 Bulletin 86/44**

(84) Etats contractants désignés:
**BE CH DE FR GB IT LI LU SE**

(71) Demandeur: **SOMASETEC**
**216, Bd. Rahal El Meskini BP no. 13821**
**Casablanca(MA)**

(72) Inventeur: **Larbi, Belkbir**
**32, rue Loukaimden**
**Agdal-Rabat(MA)**

(74) Mandataire: **Chameroy, Claude et al**
**c/o Cabinet Malemont 42, avenue du**
**Président Wilson**
**F-75116 Paris(FR)**

(54) **Dispositif de réduction du temps zéro pour des appareils d'analyse, notamment d'analyse thermogravimètrique.**

(57) L'invention concerne un appareil d'analyse équipé d'un dispositif de réduction du temps zéro qui permet de plonger instantanément l'échantillon à analyser dans son milieu d'analyse et éventuellement de le déplacer à volonté à l'intérieur de ce dernier.

Selon un premier mode de réalisation, ce dispositif est associé à une thermobalance à fléau (12). Il comprend un moteur électrique (1) qui, à l'aide d'une tige filetée (2) et d'un écrou (3), est capable de déplacer la suspension(8)supportant l'échantillon (E) pour la soulever ou l'abaisser à l'intérieur du milieu d'analyse.

Selon une variante, le dispositif est associé à une thermobalance à ressort. Il se compose de deux lames flexibles qui, sous l'action d'un mécanisme de commande, se referment pour suspendre l'échantillon ou s'ouvrent pour l'amener à un point donné.

Dans tous les cas le réducteur peut être piloté par un ordinateur (15).

Application essentielle aux analyses thermogravimètriques.

Dispositif de réduction du temps zéro pour des appareils d'analyse, notamment d'analyse thermogravimètrique

La présente invention se rapporte à un appareil d'analyse, notamment d'analyse thermogravimètrique, comprenant une enceinte d'analyse, telle qu'un four, à l'intérieur de laquelle un échantillon à analyser est destiné à être plongé pour y être maintenu dans une position de mesure, et un instrument, de mesure, notamment une thermobalance, apte à déterminer la valeur d'une caractéristique physique de l'échantillon placé dans ladite position de mesure.

Les appareils de ce type servent à analyser les propriétés physico-chimiques d'un échantillon en fonction d'un ou de plusieurs facteurs, tels que par exemple la température.

Lors des analyses thermogravimétriques réalisées d'une manière isotherme à l'aide de ces appareils, une imprécision est inévitablement introduite dans les résultats par le " temps zéro", qui est la durée nécessaire à l'échantillon pour passer d'une température donnée à la température exigée par l'analyse.

On sait que cette durée, qui dépend de l'inertie thermique du système de chauffage,ne commence, dans la pratique, qu'après la mise en place du four ou de son retrait. A chacune de ces deux phases, les données de l'analyse sont modifiées suite à une évolution de température non contrôlée entre les deux états thermiques de l'échantillon. Il en résulte une imprécision des résultats. D'autre part, cette méthode impose une position stable et définitive de l'échantillon durant toute l'analyse, ce qui exige des manipulations du four à chaque fois que l'on veut changer les conditions thermiques d'analyse. Ces inconvénients sont également perceptibles dans le cas d'une programmation de température ne nécessitant pas une manipulation du four après sa mise en place.

Dans le cas des analyses thermogravimétriques, on sait en outre que cette technique ne permet pas d'introduire et de retirer à volonté l'échantillon du milieu d'analyse.

La présente invention se propose de remédier à cet inconvénient par la réalisation d'un appareil d'analyse du type spécifié en préambule, qui permet de réduire et de fixer avec précision le temps zéro et qui, pour ce faire, se caractérise en ce qu'il comprend une suspension munie d'une nacelle de support de l'échantillon à analyser, ainsi qu'un dispositif de réduction du temps zéro comportant des moyens de retenue aptes, dans une première position, à maintenir ladite suspension à l'extérieur de l'enceinte d'analyse et des moyens de commande susceptibles de placer les moyens de retenue dans une seconde position, pour permettre à la suspension de chuter instantanément dans l'enceinte, un organe d'accrochage étant en outre prévu pour immobiliser la suspension en un point correspondant à ladite position de mesure de l'échantillon.

Grâce à ce dispositif de réduction du temps zéro, l'échantillon est instantanément plongé dans le milieu d'analyse, et notamment le milieu thermique, ce qui annule les fluctuations d'analyse dues au changement lent de la mise en température.

D'autre part, les présente invention permet de réaliser une économie de réactif et de temps tout en éliminant les risques de toxicité dûs à l'emploi de gaz agressifs.

Dans un premier mode de réalisation de l'invention, lesdits moyens de retenue comprennent un bras de support soutenant ladite suspension et lesdits moyens de commande sont constitués par un mécanisme d'entraînement apte à déplacer le bras de support, entre deux points fixant lesdites première et seconde positions.

De préférence, ledit mécanisme d'entraînement comprend une tige filetée verticale sur laquelle est vissé un écrou solidaire du bras de support et qui est accouplée à un moteur, ainsi qu'une tige de guigage parallèle à la tige filetée et le long de laquelle le bras de support est monté coulissant.

Ce premier mode de réalisation de l'invention permet non seulement de plonger instantanément l'échantillon dans le milieu d'analyse, mais aussi de le déplacer à volonté dans ce dernier, ce qui autorise une multiplicité d'analyses sur un même échantillon, telles que trempes successives, modifications des conditions opératoires à différents taux d'avancement de la transformation étudiée ... etc.

Avantageusement, le moteur est commandé par un ordinateur qui permet d'automatiser la succession d'analyses susmentionnée.

Selon une autre caractéfistique de l'invention, le bras de support soutient la suspension par un crochet engagé, de façon séparable, dans un anneau porté par l'extrémité supérieure de la suspension.

Le premier mode de réalisation du dispositif de réduction du temps zéro, conforme à l'invention,est particulièrement bien adapté pour équiper des appareils d'analyse muni d'une thermobalance à fléau.

Dans ce cas, l'organe d'accrochage de la suspension portant l'échantillon à analyser sera avantageusement constitué par un anneau formé à l'une des extrémités du fléau de la thermobalance et présentant une partie en point effilée vers le bas dans laquelle est destiné à s'engager un crochet prévu sur la suspension.

Additionnellement, une double butée escamotable est disposée de part et d'autre de l'anneau du fléau de la thermobalance pour amortir les oscillations de celui-ci, lors de l'accrochage de la suspension, cette double butée étant ensuite retirée du champ de déplacement du fléau pour permettre la pesée.

Toutefois, le premier mode de réalisation du dispositif de réduction du temps zéro, conforme à l'invention, peut tout aussi bien équiper un appareil d'analyse muni d'une thermobalance à ressort, telle qu'une thermobalance de type Mac Bain et Bakr.

Pour ce type de thermobalance, on peut cependant utiliser en variante un second mode de réalisation du dispositif de réduction du temps zéro selon l'invention, dont les moyens de retenue comprennent deux lames flexibles qui, dans leur première position, sont maintenues en contact mutuel dans un plan vertical en enserrant entre elles la suspension et dont les moyens de commande sont constitués par un mécanisme d'écartement apte à exercer une poussée horizontale sur les lames flexibles pour les écarter l'une de l'autre et les placer ainsi dans leur seconde position, dans laquelle la suspension chute instantanément dans l'enceinte d'analyse, pour placer l'échantillon dans sa position de mesure.

Avantageusement, ledit mécanisme d'écartement comprend une tige horizontale lisse qui, par une extrémité, est fixée aux deux lames flexibles et, par sa seconde extrémité, est montée coulissante à l'intérieur d'un manchon fixe portant un filetage extérieur sur lequel est vissé un écrou qui s'appuie contre un épaulement de la tige lisse.

Dans le cas de ce second mode de réalisation du dispositif de réduction du temps zéro conforme à l'invention, l'organe d'accrochage de la suspension portant l'échantillon à analyser sera avantageusement constitué par un tube mince solidaire de l'extrémité inférieure du ressort de la thermobalance et traversé par la suspension, laquelle porte une protubérance apte à s'appliquer contre l'extrémité supérieure du tube.

Additionnellement, le tube mince porte le cache de détection de la thermobalance, lequel est disposé, avec une possibilité de déplacement limité, entre quatre butées, pour empêcher toute oscillation de la suspension lors de son accrochage et éviter une rétraction excessive du ressort de la thermobalance après soulèvement à la main de la suspension.

La présente invention va maintenant être décrite plus en détail, à l'aide de plusieurs modes de réalisation donnés uniquement à titre d'exemples non-limitatifs, en référence aux dessins annexés dans lesquels:

-la figure 1 représente schématiquement un premier mode de réalisation du dispositif de réduction du temps zéro selon l'invention, équipant une thermobalance à fléau ;

-la figure 2 est une vue agrandie d'un détail du dispositif de la figure 1 ;

-la figure 3 représente schématiquement un deuxième mode de réalisation du dispositif de réduction du temps zéro selon l'invention, équipant une thermobalance à ressort de type Mac Bain et Bakr ; et

-la figure 4 est une vue schématique du premier mode de réalisation, équipant une thermobalance à ressort de type Mac Bain et Bakr.

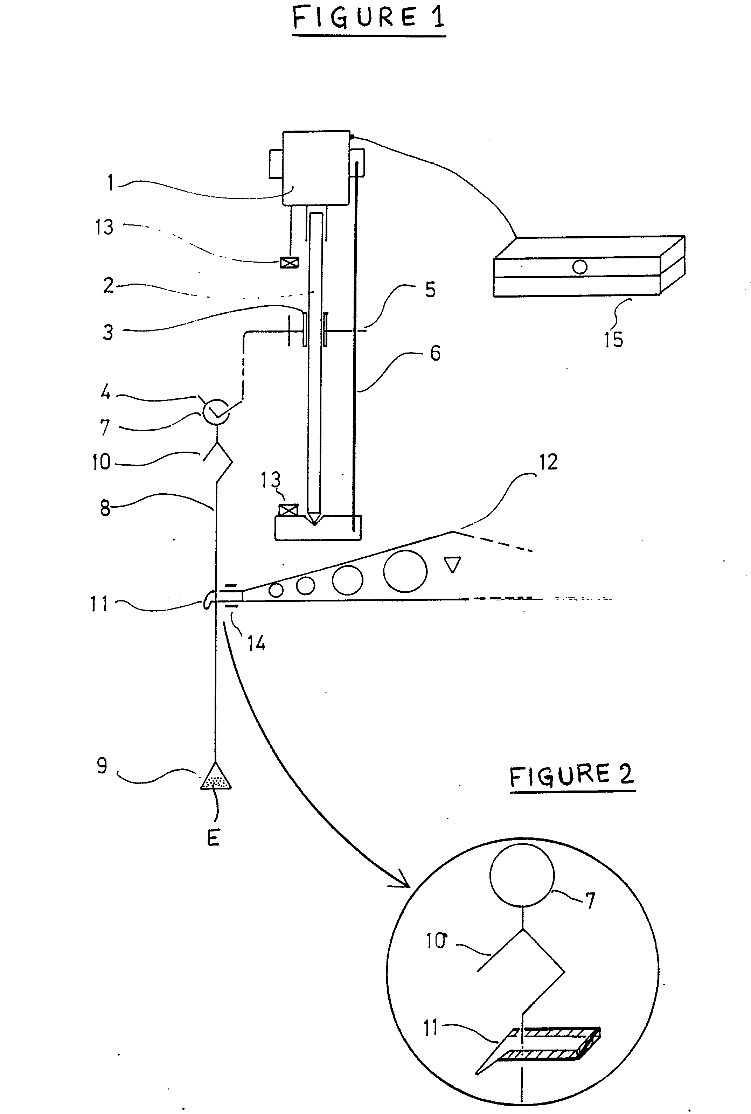

Selon un premier mode de réalisation - schématisé sur la figure 1, le dispositif de réduction du temps zéro conforme à l'invention, associé à une thermobalance à fléau, se compose d'un moteur électrique à courant continu 1 accouplé à une tige filetée verticale 2 qui entraîne dans sa rotation un écrou 3 de même pas muni d'un crochet 4 et d'un bras de support 5. Le bras 5 en glissant le long d'une tige de guidage 6 empêche l'écrou 3 de tourner sur lui-même. Le crochet 4, en s'engageant dans un anneau 7 de la suspension 8 peut soulever ou abaisser à volonté l'échantillon E retenu dans une nacelle 9. Pour que la suspension 8 prenne toujours la même position sur l'extrémité 11 du fléau 12, à chaque fois que l'on procède à une pesée, on peut donner à cette dernière la forme d'un anneau effilé en pointe vers le bas dans lequel la suspension 8 passe et s'accroche par un crochet 10 (voir figure 2).

Pour éviter la détérioration du système au cours des manipulations, des contacts de fin de course 13 judicieusement placés permettent d'arrêter le moteur 1 quand l'échantillon 9 est complètement soulevé ou quand le crochet 4 est complètement déconnecté de l'anneau 7 de la suspension 8 en cas de pesée.

De plus, pour amortir les oscillations du module, une double butée 14 escamotable bloque le fléau 12 pour ne le libérer que lorsque le crochet 10 repose parfaitement sur l'extrémité 11 du fléau 12. Toutes les opérations de réduction du temps zéro, ainsi que celles des butées 14 peuvent être commandées et synchronisées par un ordinateur 15. Ce dispositif de réduction peut s'adapter à l'ensemble des thermobalances à fléau connues, à condition qu'on lui confère une position adéquate pour chaque type de thermobalance.

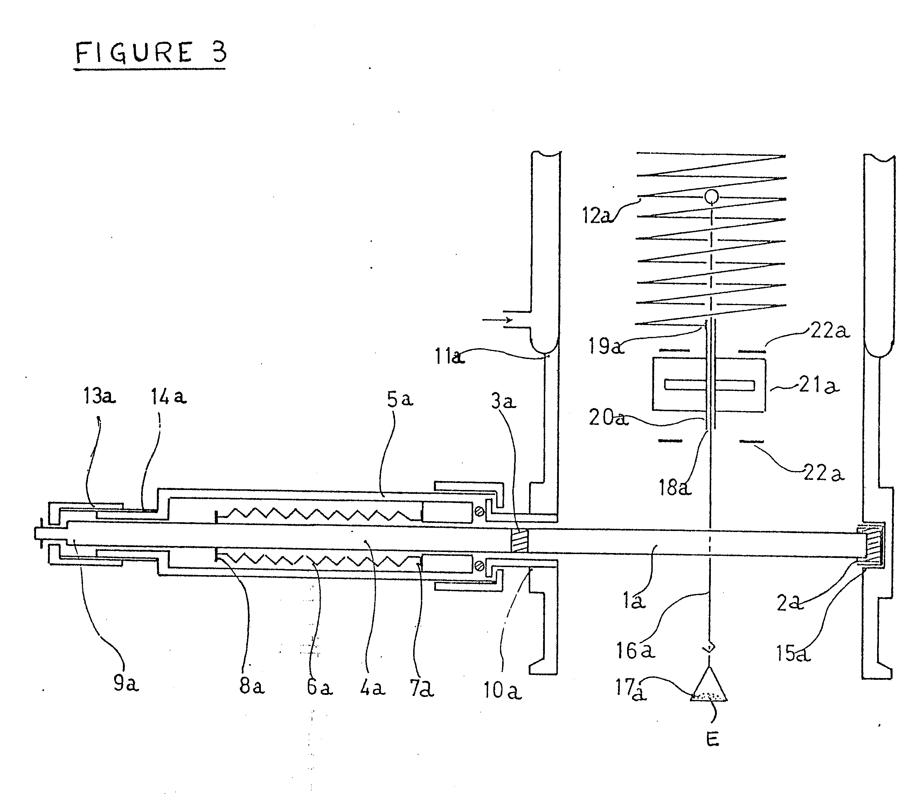

Selon un deuxième mode de réalisation - schématisé sur la figure 3, le dispositif de réduction du temps zéro, associé à une thermobalance à ressort de type Mac Bain et Bakr, se compose de deux lames minces en acier 1a qui sont fixées, d'une part, à un fileté 2a et, d'autre part, à la tête 3a d'une tige lisse 4a laquelle est liée à un corps cylindrique 5a par un soufflet 6a soudé en 7a et en 8a. La tige lisse 4 a peut coulisser dans son guide de mouvement, grâce à un écrou 13a de raccordement qui la pousse au niveau de son extrémité 9a, munie pour ce faire d'un épaulement.

Le corps 5a est raccordé à une paroi 10a de la gaine 11a du ressort 12a. Le glissement de la tige 4a est obtenu par un mouvement de vis-écrou 13a-14a qui se traduit par un écartement des deux lames flexibles 1a puisque le bout fileté 2a est engagé dans la paroi opposée 15a qui sert de butée.

Les lames flexibles 1a en s'écartant à volonté permettent à la suspension 16a d'amener l'échantillon E, retenu dans une nacelle 17a, d'un point à un autre de haut en bas, d'une façon irréversible, progressive ou non dans un milieu de conditions données. Au départ, la suspension 16a est soulevée à la main avant d'être pincée par les lames flexibles 1a. Pour éviter la détérioration du ressort 12a au cours de cette opération, on soude à son extrémité inférieure 19a un tube mince 20a qui porte la cache de détection 21a et laisse passer à travers son trou 18a la suspension 16a. Le cache, placé entre quatre butées 22a, empêche le ressort 12a de se contracter lorsque la suspension 16a est soulevée.

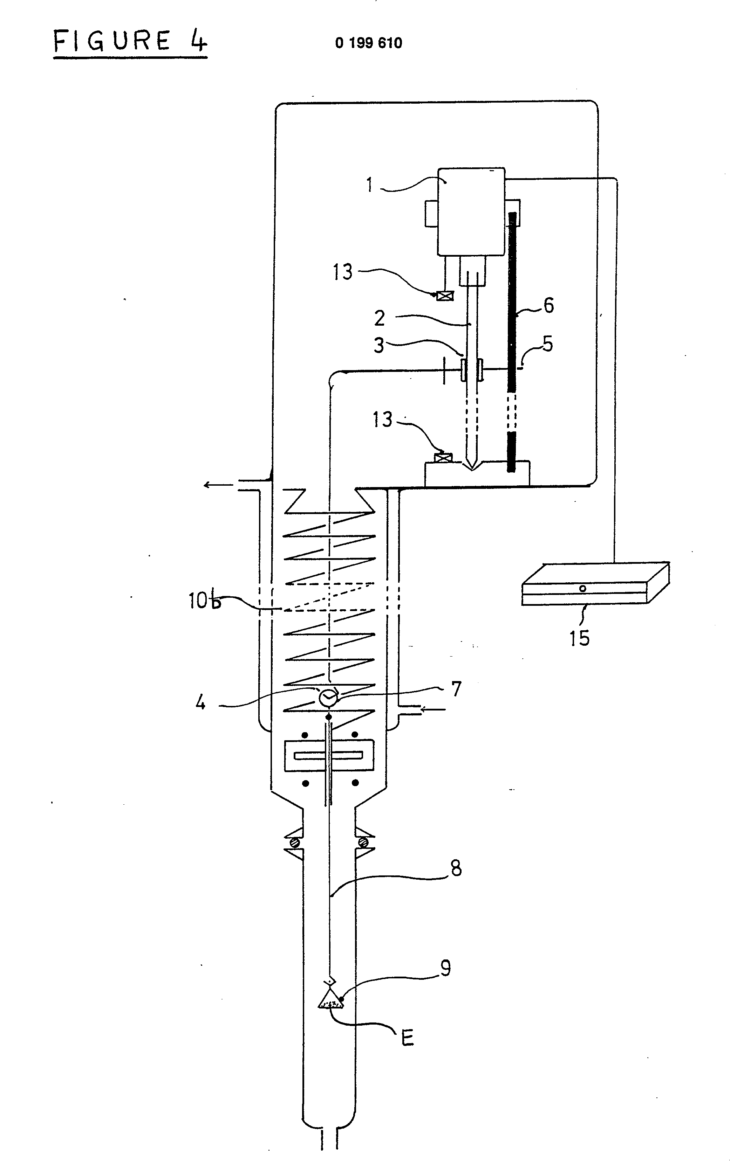

Selon une variante, schématisée par la figure 4, le dispositif de réduction du temps zéro, associé à une thermobalance à ressort de type Mac Bain et Bakr, est du même type que celui qui a été appliqué à la thermobalance à fléau (figure 1) avec son ordinateur 15 précédemment décrit. Un crochet 4 en quartz traverse le ressort 10b sur toute sa longueur pour prendre la suspension 8 par son extrémité supérieure 7 afin de soulever ou de baisser à volonté l'échantillon E retenu dans la nacelle 9.

Le dispositif de réduction du temps zéro, objet de l'invention, peut être totalement ou partiellement automatisé. Il trouve son application dans tous les cas où il s'agit de retirer ou d'introduire un échantillon dans un milieu de nature physico-chimique donnée à un moment voulu et peut être associé à tout type de thermobalance, telle que les thermobalances à fléau, à ressort ou à suspension magnétique. Le dispositif de réduction du temps zéro selon l'invention peut être piloté par un ordinateur qui sert également à traiter les données de l'analyse suivant un programme préalablement établi.

## Revendications

1. Appareil d'analyse, notamment d'analyse thermogravimètrique, comprenant une enceinte d'analyse, telle qu'un four, à l'intérieur de laquelle un échantillon à analyser (E) est destiné à être plongé pour y être maintenu dans une position de mesure, et un instrument de mesure (12 ; 12a), notamment une thermobalance, apte à déterminer la valeur d'une caractéristique physique de l'échantillon placé dans ladite position de mesure, caractérisé en ce qu'il comprend une suspension (8 ; 16a) munie d'une nacelle de support (9 ; 17a) de l'échantillon à analyser (E), ainsi qu'un dispositif de réduction du temps zéro comportant des moyens de retenue (5 ; 1a) aptes, dans une première position, à maintenir ladite suspension (8 ; 16a) à l'extérieur de l'enceinte d'analyse et des moyens de commande (1, 2, 3, 6 ; 4a, 13a, 14a) susceptibles de placer les moyens de retenue (5 ; 1a) dans une seconde position, pour permettre à la suspension (8 ; 16a) de chuter instantanément dans l'enceinte, un organe d'accrochage (11 ; 20a) étant en outre prévu pour immobiliser la suspension en un point correspondant à ladite position de mesure de l'échantillon.

2. Appareil d'analyse selon la revendication 1, caractérisé en ce que lesdits moyens de retenue comprennent un bras de support (5) soutenant ladite suspension (8) et lesdits moyens de commande sont constitués par un mécanisme d'entraînement - (1, 2, 3, 6) apte à déplacer le bras de support (5), entre deux points fixant lesdites première et seconde positions.

3. Appareil d'analyse selon la revendication 2, caractérisé en ce que ledit mécanisme d'entraînement comprend une tige filetée verticale (2) sur laquelle est vissé un écrou (3) solidaire du bras de support (5) et qui est accouplée à un moteur - (1), ainsi qu'une tige de guidage (6) parallèle à la tige filetée (2) et le long de laquelle le bras de support (5) est monté coulissant.

4. Appareil d'analyse selon la revendication 3, caractérisé en ce que le moteur (1) est commandé par un ordinateur (15).

5. Appareil d'analyse selon l'une quelconque des revendications 2 à 4, caractérisé en ce que le bras de support (5) soutient la suspension (8) par un crochet (4) engagé, de façon séparable, dans un anneau (7) porté par l'extrémité supérieure de la suspension (8).

6. Appareil d'analyse selon la revendication 1, caractérisé en ce que lesdits moyens de retenu comprennent deux lames flexibles (1a) qui, dans leur première position, sont maintenues en contact mutuel dans un plan vertical en enserrant entre elles la suspension (16a) et lesdits moyens de commande sont constituées par un mécanisme d'écartement(4a, 13a, 14a) apte à exercer une poussée horizontale sur les lames flexibles (1a) pour les écarter l'une de l'autre et les placer ainsi dans leur seconde position.

7. Appareil d'analyse selon la revendication 6, caractérisé en ce que ledit mécanisme d'écartement comprend une tige horizontale lisse (4a) qui, par une extrémité, est fixée aux deux lames flexibles - (1a) et, part sa seconde extrémité, est montée coulissante à l'intérieur d'un manchon fixe (5a) portant un filetage extérieur (14a) sur lequel est vissé un écrou (13a) qui s'appuie contre un épaulement de la tige lisse (4a).

8. Appareil d'analyse selon l'une quelconque des revendication 1 à 7, dans lequel l'instrument de mesure est une thermobalance à fléau (12), caractérisé en ce que ledit organe d'accrochage est constitué par un anneau (11) formé à l'une des extrémités du fléau (12) de la thermobalance et présentant une partie en pointe effilée vers le bas dans laquelle est destiné à s'engager un crochet - (10) prévu sur la suspension (8).

9. Appareil d'analyse selon la revendication 8, caractérisé en ce qu'une double butée escamotable - (14) est disposée de part et d'autre de l'anneau - (11) du fléau (12) de la thermobalance.

10. Appareil d'analyse selon l'une quelconque des revendications 1 à 7, dans lequel l'instrument de mesure est une thermobalance à ressort (12a), caractérisé en ce que ledit organe d'accrochage est constitué par un tube mince (20a) solidaire de l'extrémité inférieure du ressort (12a) de la thermobalance et traversé par la suspension (16a), laquelle porte une protubérance apte à s'appliquer contre l'extrémité supérieure du tube (20a).

11. Appareil d'analyse selon la revendication 10, caractérisé en ce que le tube mince (20a) porte le cache de détection (21a) de la thermobalance, lequel est disposé, avec une possibilité de déplacement limité, entre quatre butées (22a).

1. Appareil d'analyse, notamment d'analyse thermogravimètrique, comprenant une enceinte d'analyse, telle qu'un four, à l'intérieur de laquelle un échantillon à analyser (E) est destiné à être plongé pour y être maintenu dans une position de mesure, et un instrument de mesure (12 ; 12a), notamment une thermobalance, apte à déterminer la valeur d'une caractéristique physique de l'échantillon placé dans ladite position de mesure, caractérisé en ce qu'il comprend une suspension (8 ; 16a) munie d'une nacelle de support (9 ; 17a) de l'échantillon à analyser (E), ainsi qu'un dispositif de réduction du temps zéro comportant des moyens de retenue (5 ; 1a) aptes, dans une première position, à maintenir ladite suspension (8 ; 16a) à l'extérieur de l'enceinte d'analyse et des moyens de commande (1, 2, 3, 6 ; 4a, 13a, 14a) susceptibles de placer les moyens de retenue (5 ; 1a) dans une seconde position, pour permettre à la suspension (8 ; 16a) de chuter instantanément dans l'enceinte, un organe d'accrochage (11 ; 20a) étant en outre prévu pour immobiliser la suspension en un point correspondant à ladite position de mesure de l'échantillon.

2. Appareil d'analyse selon la revendication 1, caractérisé en ce que lesdits moyens de retenu comprennent un bras de support (5) soutenant ladite suspension (8) et lesdits moyens de commande sont constitués par un mécanisme d'entraînement - (1, 2, 3, 6) apte à déplacer le bras de support (5), entre deux points fixant lesdites première et seconde positions.

3. Appareil d'analyse selon la revendication 2, caractérisé en ce que ledit mécanisme d'entraînement comprend une tige filetée verticale (2) sur laquelle est vissé un écrou (3) solidaire du bras de support (5) et qui est accouplée à un moteur - (1), ainsi qu'une tige de guidage (6) parallèle à la tige filetée (2) et le long de laquelle le bras de support (5) est monté coulissant.

4. Appareil d'analyse selon la revendication 3, caractérisé en ce que le moteur (1) est commandé par un ordinateur (15).

5. Appareil d'analyse selon l'une quelconque des revendications 2 à 4, caractérisé en ce que le bras de support (5) soutient la suspension (8) par un crochet (4) engagé, de façon séparable, dans un anneau (7) porté par l'extrémité supérieure de la suspension (8).

6. Appareil d'analyse selon la revendication 1, caractérisé en ce que lesdits moyens de retenu comprennent deux lames flexibles (1a) qui, dans leur première position, sont maintenues en contact mutuel dans un plan vertical en enserrant entre elles la suspension (16a) et lesdits moyens de commande sont constituées par un mécanisme d'écartement(4a, 13a, 14a) apte à exercer une poussée horizontale sur les lames flexibles (1a) pour les écarter l'une de l'autre et les placer ainsi dans leur seconde position.

7. Appareil d'analyse selon la revendication 6, caractérisé en ce que ledit mécanisme d'écartement comprend une tige horizontale lisse (4a) qui, par une extrémité, est fixée aux deux lames flexibles - (1a) et, part sa seconde extrémité, est montée coulissante à l'intérieur d'un manchon fixe (5a) portant un filetage extérieur (14a) sur lequel est vissé un écrou (13a) qui s'appuie contre un épaulement de la tige lisse (4a).

8. Appareil d'analyse selon l'une quelconque des revendication 1 à 7, dans lequel l'instrument de mesure est une thermobalance à fléau (12), caractérisé en ce que ledit organe d'accrochage est constitué par un anneau (11) formé à l'une des extrémités du fléau (12) de la thermobalance et présentant une partie en pointe effilée vers le bas dans laquelle est destiné à s'engager un crochet - (10) prévu sur la suspension (8).

9. Appareil d'analyse selon la revendication 8, caractérisé en ce qu'une double butée escamotable - (14) est disposée de part et d'autre de l'anneau - (11) du fléau (12) de la thermobalance.

10. Appareil d'analyse selon l'une quelconque des revendications 1 à 7, dans lequel l'instrument de mesure est une thermobalance à ressort (12a), caractérisé en ce que ledit organe d'accrochage est constitué par un tube mince (20a) solidaire de l'extrémité inférieure du ressort (12a) de la thermobalance et traversé par la suspension (16a), laquelle porte une protubérance apte à s'appliquer contre l'extrémité supérieure du tube (20a).

11. Appareil d'analyse selon la revendication 10, caractérisé en ce que le tube mince (20a) porte le cache de détection (21a) de la thermobalance, lequel est disposé, avec une possibilité de déplacement limité, entre quatre butées (22a).

# FIGURE 1

# FIGURE 2

FIGURE 3

FIGURE 4

0 199 610